(19) Europäisches Patentamt
European Patent Office
Office européen des brevets

(11) EP 4 542 814 A1

(12) EUROPEAN PATENT APPLICATION

(43) Date of publication:
23.04.2025 Bulletin 2025/17

(21) Application number: 23203925.5

(22) Date of filing: 16.10.2023

(51) International Patent Classification (IPC):
H02J 3/38 $^{(2006.01)}$    H01L 31/052 $^{(2014.01)}$
H02S 40/42 $^{(2014.01)}$

(52) Cooperative Patent Classification (CPC):
H02J 3/381; H02S 40/425; H10F 77/63;
H02J 2300/10; H02J 2300/24; H02J 2310/64

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicants:
• IMEC VZW
3001 Leuven (BE)
• Universiteit Hasselt
3500 Hasselt (BE)

(72) Inventors:
• IWABUCHI, Koki
Mino 562-0024 (JP)
• CATTHOOR, Francky
9140 Temse (BE)
• WATARI, Daichi
3600 Genk (BE)
• TANIGUCHI, Ittetsu
Osaka 565-0875 (JP)
• ZHAO, Dafang
Osaka 565-0875 (JP)

(74) Representative: Winger
Mouterij 16 bus 101
3190 Boortmeerbeek (BE)

(54) OPTIMIZING OUTPUT POWER CHARACTERISTICS OF A PHOTOVOLTAIC SYSTEM

(57) A method for optimizing output power characteristics of a photovoltaic system (1) comprising one or more photovoltaic panels (10), the method comprising:

obtaining at least data representative of power ( $P_t^{PV}$ ) generated by the one or more photovoltaic panels (10) in function of time, and assigning, based on at least said data, a first amount of power ($O_t$) to outputting by the photovoltaic system (1) and a second amount of power ( $P_t^{cooling}$ ) to cooling of the one or more photovoltaic panels (10), so as to optimize the output power characteristics of the photovoltaic system (1).

FIG. 2

EP 4 542 814 A1

**Description**

**Technical field of the invention**

The present invention relates to photovoltaic systems. More in particular, the present invention relates to optimizing the output power characteristics, e.g., but not limited thereto, the ramp rate of the output power, of photovoltaic systems.

**Background of the invention**

Solar energy is one of the most promising renewable energy alternatives to fossil fuels for mitigating global warming. However, as power generation by photovoltaic systems comprising photovoltaic panels is increasingly adopted, it poses challenges to the operation of the power grid. The yield of photovoltaic panels depends on temperature, solar irradiation intensity, and other weather factors. Among them, solar irradiation, which is converted to electricity by said photovoltaic panels, varies instantaneously and significantly with different locations and weather conditions. This can result in poor output power characteristics, such as in particular large power ramp rates, of the output power of these photovoltaic systems, and thus issues related to electrical grid signal quality and integrity such as grid frequency issues, which can create grid stability concerns. Various methods have been studied so far to solve this problem.

One way known in the art to reduce ramp rates, i.e., short-term power fluctuations, of the output power of these photovoltaic systems, is to combine photovoltaic systems with some form of energy storage systems such as batteries. Marcos, J., et al. "Storage requirements for PV power ramp-rate control." Solar Energy 99 (2014): 28-35 proposed an effective method for calculating the maximum power and minimum energy storage requirements for any given photovoltaic power plant size and maximum allowable ramp rate. The effectiveness of the calculation method was supported by simulations performed on real data from photovoltaic power plants in Portugal and Spain. A strategy for ramp rate control while ensuring that the energy storage system charge is not depleted at the end of the day has also been proposed by Duchaud, Jean-Laurent, et al. "Power ramp-rate control algorithm with optimal State of Charge reference via Dynamic Programming." Energy 149 (2018): 709-717. The strategy used a ramp rate limiting algorithm with state of charge feedback control. The controller reference was optimized with a Dynamic Programming algorithm using weather and consumption forecasts. Every two hours, the optimization was updated using the actual state of charge and new predictions. The algorithm was applied to real data and showed improvements in photovoltaic power plant operating costs. For methods using energy storage systems, ramp rate control that also takes degradation of the energy storage systems (e.g., electrical batteries) into account is important. Martins, João, et al. "Comparative study of ramp-rate control algorithms for PV with energy storage systems." Energies 12.7 (2019): 1342 compared ramp rate control algorithms by energy storage systems. The commonly used algorithms were compared, especially in terms of battery status, which is directly related to battery life performance. In that comparison, the energy storage system capacity required for each algorithm was also analysed. Through the comparison, the control algorithm with the second-order low-pass filter not only used less battery capacity than the other algorithms, but also had fewer cycles and reduced deepness, and thus was expected to have a longer lifetime. Battery degradation over time was also evaluated through a simulation of a large photovoltaic power plant using actual irradiance data in Beltran, Hector, et al. "Levelized cost of storage for li-ion batteries used in PV power plants for ramp-rate control." IEEE Transactions on Energy Conversion 34.1 (2019): 554-561. That simulation assumed different battery sizes in use under various restrictions on output power ramp rate variations. The results highlight the importance of battery operating temperature and the influence of battery size and degree of ramp rate limitation on battery degradation.

Another means of mitigating the unstable effects of power fluctuations known in the art is to use controllable power generation, such as gas engine generators. Such generators are used to mitigate low speed ramp up/down. Johnson, Jay, et al. "PV output smoothing using a battery and natural gas engine-generator." 2013 IEEE 39th Photovoltaic Specialists Conference (PVSC). IEEE, 2013 is on the development of a controller that coordinates the operation of a small gas engine generator set with a battery. By combining conventional generation resources with batteries in a photovoltaic system, the output power variability of the photovoltaic system can be reduced to a specific level and battery life can be extended. A number of simulations on smoothing the output power of a photovoltaic system were performed using data collected from actual photovoltaic panels, energy storage systems, and gas engine generators. By adjusting control parameters, the trade-off between battery usage and ramp rate could be adjusted. A new control strategy for diesel generator operation in systems with high photovoltaic penetration (> 70%) is also proposed in Sachs, Julia, et al. "Filter-based PV power smoothing control for island hybrid energy systems with high PV penetration." 2014 IEEE International Conference on Automation Science and Engineering (CASE). IEEE, 2014. The operation strategy is based on filter-based control, including Kalman or particle filters, and small energy storage to take on standby capacity of the diesel generator. Optimal operating points for the diesel generators are identified based on filtered solar generation data. A simulation analysis with actual load profiles shows that the method reduces cold starts by 50% and significantly improves the operation of the diesel generators compared to conventional hybrid energy management strategies. The proposed strategy also reduced energy costs by up to 7% when photovoltaic penetration was high.

A third way to reduce the variability of power generated by photovoltaic systems known in the art is to use dump loads to reduce the amount of power fed into the grid during periods of high variability. A dump load consists of a resistor and a controller that controls the power flowing through the load. In some cases, the load is cooled to avoid excessive heating during operation. The primary function of a dump load is to absorb excess power generated by the photovoltaic system and to smooth the power injected into the grid. Power suppression with dump loads has proven to be a better option when larger power fluctuations are allowed, with less revenue loss than the use of batteries for energy storage (see Omran, Walid A., M. Kazerani, and M. M. A. Salama. "Investigation of methods for reduction of power fluctuations generated from large grid-connected photovoltaic systems." IEEE Transactions on Energy Conversion 26.1 (2010): 318-327). At the same time, combining energy storage systems with dumping excess power has proven to be a more economical solution.

However, these high-capacity energy storage systems, and controllable power generation systems such as gas and diesel engine generators, have high system costs, such as investment and maintenance, and a large environmental impact. Furthermore, controllable power generation systems typically cannot just control the ramp rate when power generation by photovoltaic panels increases. Instead, the investment has to be reconsidered and implemented every time the photovoltaic system increases in capacity. This causes additional delays for deployment and associated costs. For dump loads, the reduced power cannot be effectively utilized, and cannot be used to control the ramp rate when power generation by photovoltaic panels decreases.

There is thus still a need in the art for devices and methods that address at least some of the above problems.

## Summary of the invention

It is an object of the present invention to provide a good method for optimizing output power characteristics of a photovoltaic system. It is an object of the present invention to provide a good photovoltaic system.

The above objective is accomplished by a method and device according to embodiments of the present invention.

It is an advantage of embodiments of the present invention that rejection of the output power by a grid to which the output of the photovoltaic system may be connected may be prevented. The grid may reject the output power when the output power characteristics are poor, for example, when the ramp rate is too large. The method may scale up automatically when power generation by the photovoltaic panels of the photovoltaic system is increased, so, preferably, no additional investments or delays are incurred in such a case.

It is an advantage of embodiments of the present invention that a cost-efficient way of optimizing output power characteristics of the photovoltaic system may be achieved. It is, indeed, an advantage of embodiments of the present invention that energy generated by the one or more photovoltaic panels of the photovoltaic system that would otherwise be wasted, or temporarily stored in an expensive energy storage system, to optimizing output power characteristics may, instead, be used to cool the one or more photovoltaic panels. It is an advantage of embodiments of the present invention that said cooling may further increase the power generation efficiency of the one or more photovoltaic panels.

In a first aspect, the present invention relates to a method for optimizing output power characteristics of a photovoltaic system comprising one or more photovoltaic panels. The method comprises obtaining at least data representative of power generated by the one or more photovoltaic panels in function of time. The method further comprises assigning, based on at least said data, a first amount of power to outputting by the photovoltaic system and a second amount of power to cooling of the one or more photovoltaic panels, so as to optimize the output power characteristics of the photovoltaic system.

The output power characteristics may be any characteristic on power outputted, e.g., delivered to the grid, that could prevent issues related to electrical grid signal quality and integrity, such as ramp rate or magnitude of the output power.

In preferred embodiments, said assigning of the first and second amounts of power is performed so as to at least optimize a ramp rate of the output power. It is an advantage of these embodiments that if the ramp rate is so large that outputted power would be rejected, e.g., by a grid to which the photovoltaic system may be electrically coupled, part of the generated power could be assigned to cooling of the one or more photovoltaic panels, which may prevent rejection by the grid as less power may be outputted. Furthermore, said cooling may increase the energy yield of the one or more photovoltaic panels.

The power from which the first and second amount of power are assigned, may be power provided by all power sources within the photovoltaic system, and at least comprises the power generated by the one or more photovoltaic panels. The photovoltaic system may, however, comprise further power sources, such as an energy storage system. Thus, the first and second amount may comprise power generated by the one or more photovoltaic panels, and may further comprise power provided by said further power sources, in particular by the energy storage system. The first amount of power may be zero or a positive amount of power. The second amount of power may be zero or a positive amount of power.

In embodiments, said assigning furthermore comprises assigning a third amount of power to charging of the energy storage system. The third amount of power may be zero or a positive amount of power. The energy storage system preferably comprises an electric battery, but may instead, or as well, comprise other types of energy storage systems, such as energy storage systems making use of hydropower, gravity-based energy storage, or compressed air energy storage, or a thermal battery. In these embodiments, said assigning may further comprise providing an amount of power from the energy storage system by discharging of the energy storage system. Said power from the energy storage system may be added to the power provided by the photovoltaic panels, so that said assigning of the first and second amount of power may comprise discharging of the energy storage system. The energy storage system may store power generated by the one or more photovoltaic panels for use at a later moment in time, to further optimize the output power characteristics, such as ramp rate, of the output power. It is an advantage of embodiments of the present invention that the capacity of the energy storage system, e.g., batteries, may be small compared to conventional batteries used for optimizing the output power characteristics, such as ramp rate, in photovoltaic systems of the prior art, because part of the excess energy may be used for cooling the one or more photovoltaic panels, and hence does not need to be stored.

The photovoltaic system may be any system that comprises one or more photovoltaic panels. For example, the photovoltaic system may be a photovoltaic power plant, or may be a group of houses or a set of apartments combining their accumulated excess power for outputting to the grid.

In embodiments, obtaining data representative of power generated by the one or more photovoltaic panels in function of time comprises obtaining real-time data. It is an advantage of these embodiments that real-time data typically provides an accurate way of optimizing the output power characteristics. Furthermore, real-time data is typically easy to obtain, e.g., by detecting the power outputted by the one or more photovoltaic panels. Obtaining data may comprise obtaining simulated data. Simulated data may be used, e.g., as initial input data. In embodiments, said data representative of power generated by the one or more photovoltaic panels in function of time comprises data points of output power as dependent on time, or may contain a ramp rate of the power generated by the one or more photovoltaic panels.

In embodiments, the ramp rate is a magnitude of a change in power, e.g., output power, over a period of time. The ramp rate may be an instantaneous ramp rate or a derivative of the power as a function of time, or may be a mean ramp rate taken over a particular (non-infinite) time interval. In embodiments, optimizing the ramp rate of the output power may comprise reducing a mean ramp rate over a period of time.

The characteristics of the output power of the photovoltaic system may be optimized to prevent rejection of said output power by a grid, or any other external system requiring particular characteristics of power provided thereto, electrically coupled to the output of the photovoltaic system. For example, a grid, electrically coupled to the output of the photovoltaic system, may reject power outputted by the photovoltaic system if the ramp rate of power delivered to the grid becomes too large, e.g., exceeds a threshold ramp rate.

In embodiments, optimizing the ramp rate of the output power of the photovoltaic system comprises limiting the ramp rate of the output power of the photovoltaic system, such as minimizing the ramp rate of the output power of the photovoltaic system or limiting said ramp rate to a threshold ramp rate.

In embodiments, a load may be comprised in the photovoltaic system, or the load may be electrically coupled to the photovoltaic system, e.g., to the output of the photovoltaic system. In embodiments, said assigning is further based on a load profile of said load, i.e., a demand of the load as function of time. When the load is comprised in the photovoltaic system, said assigning may comprise assigning a fourth amount of power to the load.

When the load is electrically coupled to the output, using the load profile for said assigning may further increase the accuracy of said assigning for optimizing the output power characteristics, e.g., at least the ramp rate, of the output power of the photovoltaic system. For example, if the obtained data representative of power generated by the one or more photovoltaic panels in function of time indicates a large positive ramp rate in generated power, but the demand of the load, coupled to the output, indicates a correspondingly large positive ramp rate, it may be advantageous to ramp up the first amount of power assigned to outputting by the photovoltaic system so as to compensate for the ramp rate of the demand of the load. Indeed, in this example, the power provided to the grid may be constant, as the surge in demand by the load and the power outputted by the photovoltaic system compensate for each other. In preferred embodiments, the output power characteristics, e.g., ramp rate, of the output power of the photovoltaic system may be optimized so as to limit output power characteristics, e.g., a ramp rate, of the power provided to the grid, or to any other external system requiring particular characteristics of power provided thereto. For example, the ramp rate of the power provided to the grid may be minimized or said ramp rate of the power provided to the grid may be limited to a threshold ramp rate. These embodiments are particularly advantageous in embodiments wherein said load is electrically coupled to the output of the photovoltaic system.

In embodiments, the method comprises obtaining a threshold ramp rate, and said assigning is further based on said obtained threshold ramp rate. The threshold ramp rate may be a predetermined threshold ramp rate that is set for the photovoltaic system during manufacturing or installation, or may be variable, e.g., depend on time. For example, the threshold ramp rate may be set by an external agent, i.e., an agent that is external to the photovoltaic system, e.g., a human or an external controller. Said external agent may determine a threshold ramp rate, for example, based on lookup tables or real-time data.

In embodiments, optimizing the ramp rate comprises reducing a mean ramp rate over a period of time. By reducing the mean ramp rate over a period of time, less output power may be rejected, resulting in more efficient energy usage.

In embodiments, said assigning is at least performed so as to optimize a magnitude of the output power and/or a magnitude of a wasted power.

In embodiments, optimizing a magnitude of the wasted power comprises minimizing the magnitude of the wasted power. Wasted power is typically generated power that is dumped (for example, in a dump load) when it cannot be outputted (as the power would be rejected) or stored or used for cooling or used in any other way.

In embodiments, optimizing a magnitude of the output power comprises maximizing the magnitude of the output power. In embodiments, optimizing a magnitude of the output power comprises limiting the magnitude of the output power of the photovoltaic system to a maximum output power. For example, the magnitude of the output power may be maximized, except for when said magnitude would exceed a maximum output power or when the power provided to the grid exceeds a maximum output power, in which case the output power may be limited, e.g., capped, to prevent exceeding said maximum output power. The maximum output power may be a predetermined maximum output power set at installation of the photovoltaic system, or may be variable over time, e.g., may be set by an external agent, such as a human or a controller. For example, the maximum output power may be determined by a power demand from the grid to which the photovoltaic system may be connected.

In some embodiments, optimizing a magnitude of the output power comprises maximizing a profit on the output power. It is an advantage of these embodiments that, when a dynamical pricing procedure is in place for power outputted by the photovoltaic system, or for power provided to the grid, said assigning may be adapted so that more power may be outputted at instances when prices on power are high, whereas more power may be used for cooling, or temporarily stored in the energy storage system contained in the photovoltaic system, at instances when prices on power are low, to, at a later time when prices are high, be able to output more power.

Preferably, said assigning is adapted so that a good balance is achieved between the ramp rate of the output power, the magnitude of the output power, and/or the magnitude of the wasted power, so that the output power is not rejected, while the magnitude of the output power is at the same time as large as possible and/or while wasting as little of the generated power as possible.

In embodiments, when the data representative of power generated by the one or more photovoltaic panels in function of time indicates an increase of power generated by the one or more photovoltaic panels over a period of time, and when said optimizing the ramp rate means that the ramp rate is to be suppressed, said assigning comprises reducing the first amount and increasing the second amount over said period of time. It is an advantage of these embodiments that, in case of a rapid increase in power generated by the one or more photovoltaic panels, more power may be assigned to cooling of the one or more photovoltaic panels, thereby suppressing the ramp rate of the output power and at the same time boosting the efficiency of the power generation of the one or more photovoltaic panels.

In embodiments, when the data representative of power generated by the one or more photovoltaic panels in function of time indicates a reduction of power generated by the one or more photovoltaic panels over a period of time, and when said optimizing the ramp rate means that the ramp rate is to be suppressed, said assigning comprises increasing the first amount and reducing the second amount over said period of time. It is an advantage of these embodiments that, in case of a rapid decrease in power generated by the one or more photovoltaic panels, power previously assigned to cooling of the one or more photovoltaic panels may, instead, be assigned to outputting, thereby suppressing the ramp rate of the output power. This may be reinforced by the now cooled one or more photovoltaic panels having a large efficiency of the power generation, mitigating said rapid decrease.

In embodiments, said assigning is further based on data representative of weather information in function of time. Using weather information, e.g., weather predictions, may further improve the optimization of the output power characteristics. For example, using weather information may facilitate anticipating changes in power generation.

In a second aspect, the present invention relates to a photovoltaic system. The photovoltaic system comprises one or more photovoltaic panels. The photovoltaic system further comprises a controller configured for obtaining at least data representative of power generated by the one or more photovoltaic panels in function of time. The controller is further configured for assigning, based on at least said data, a first amount of power to outputting by the photovoltaic system, and a second amount of power to cooling of the one or more photovoltaic panels, so as to optimize the output power characteristics of the photovoltaic system. The photovoltaic system further comprises a cooling unit for cooling of the one or more photovoltaic panels, adapted for receiving the second amount of power. The photovoltaic system further comprises an output for outputting the first amount of power.

The cooling unit is typically thermally coupled to, e.g., in physical contact with, the one or more photovoltaic panels. Preferably, the cooling unit may reach a wide range of cooling capacities. The cooling power of the cooling unit is preferably tuneable over a wide range. The cooling unit may comprise any type of cooling unit, such as a radiator, heat pump, refrigerator, water spray cooling unit, or air conditioning system. The cooling unit may comprise a phase change material, which may absorb heat, hence provide cooling, when transitioning to another phase a different crystal structure; and/or a radiator comprising nanofluids, which are fluids comprising dispersed (typically metallic) nanomaterials, which may improve the thermal conductivity of the fluid.

Cooling technologies using phase change materials, nanofluids, and their combination were investigated by Ali, Hafiz Muhammad. "Recent advancements in PV cooling and efficiency enhancement integrating phase change materials based systems-A comprehensive review." Solar Energy 197 (2020): 163-198, where it was found that a passive cooling approach using phase change materials can improve the efficiency of photovoltaic panels by up to 20%. There is also literature on the role of nanofluids on photovoltaic-thermal system performance and the use of nanofluids as coolants and optical filters, such as Hamzat, Abdulhammed K., et al. "Advances in PV and PVT cooling technologies: A review." Sustainable Energy Technologies and Assessments 47 (2021): 101360. The use of nanofluids in photovoltaic-thermal systems was found to improve the efficiency of photovoltaic panels by over 60%, while integration with phase change materials was found to improve photovoltaic-thermal system efficiency by 32%.

The cooling unit is preferably an efficient cooling unit, requiring as little as possible input power for removing from the one or more photovoltaic panels an as large amount of heat as possible. The efficiency of a cooling unit may be quantified by a coefficient of performance that is the ratio of useful heat removed by the cooling unit to the power inputted to the cooling unit. In embodiments, the coefficient of performance of the cooling unit may have any value, e.g., at least 0.1, but is preferably at least 1, more preferably at least 3, still more preferably at least 5, yet more preferably at least 10. Preferably, the cooling unit is thermally coupled, e.g., in physical contact with, each of the one or more photovoltaic panels.

In embodiments, the photovoltaic system further comprises an energy storage system, adapted for receiving a third amount of power for charging of the energy storage system, and for providing power to the cooling unit and/or to the output of the photovoltaic system, by discharging of the energy storage system. Charging of the energy storage system may be used to temporarily store generated power, which may further optimize the output power characteristics, e.g., the ramp rate, of the output power and the cooling of the photovoltaic panels. However, it is an advantage of embodiments of the present invention that the capacity of the energy storage system, e.g., electrical battery, may be small compared to electrical batteries used in photovoltaic systems of the prior art.

In embodiments, the controller is configured for performing a method in accordance with embodiments of the first aspect of the present invention. In embodiments, the controller comprises means, e.g., an interface, for obtaining at least data representative of power generated by the one or more photovoltaic panels in function of time, such as an input port or a receiver. A power meter for detecting the power generated by the photovoltaic panels may be communicatively coupled to said input port. In embodiments, the controller comprises means, e.g., an interface, for obtaining a load profile of a load comprised in the photovoltaic system or electrically coupled to the output of the photovoltaic system.

In embodiments, the controller may comprise an electrical input for receiving the power generated by the one or more photovoltaic panels, and possibly an electrical input for receiving the power provided by other energy sources such as the energy storage system. In embodiments, the controller may comprise an electrical output for outputting the first amount of power to the output of the photovoltaic system and an electrical output for outputting the second amount of power to the cooling unit. The controller may further comprise an electrical output for providing the third amount of power to the energy storage system. The controller may further comprise an electrical output for providing a fourth amount of power to a load comprised in the photovoltaic system.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

FIG. 1A, FIG. 1B, FIG. 1C and FIG. 1D schematically represent power flow within a photovoltaic system in accordance with embodiments of the present invention, and from the photovoltaic system to a load and/or grid, in a method in accordance with embodiments of the present invention.

FIG. 2 schematically represents a microgrid comprising a photovoltaic system in accordance with embodiments of the present invention, electrically coupled to a main grid.

FIG. 3 schematically represents how different models are combined for simulating power flow within the photovoltaic system in accordance with embodiments of the present invention.

FIG. 4 schematically illustrates a battery model for modelling a power storage system in accordance with embodiments of the present invention.

FIG. 5 is a plot of data of solar irradiation at the University of Oldenburg experimental PV site, covering a 15-minute period during which power generation by one or more photovoltaic panels is highly variable.

FIG. 6A and FIG. 6B are plots of mean and maximum ramp rates of power exchanged between the microgrid and the main grid as calculated in a simulation for a method in accordance with embodiments of the present invention.

FIG. 7A and FIG. 7B are plots of simulation results for 200 seconds during the 15-minute period of the simulation. FIG. 7C is zoomed in on part of FIG. 7A.

FIG. 8A, FIG. 8B and FIG. 8C are plots of the mean ramp rate, maximum ramp rate, and accumulated energy, respectively, for different simulations using different battery capacities and COPs.

In the different figures, the same reference signs refer to the same or analogous elements.

## Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a method for optimizing output power characteristics of a photovoltaic system comprising one or more photovoltaic panels. The method comprises obtaining at least data representative of power generated by the one or more photovoltaic panels in function of time. The method further comprises assigning, based on at least said data, a first amount of power to outputting by the photovoltaic system and a second amount of power to cooling of the one or more photovoltaic panels, so as to optimize the output power characteristics of the photovoltaic system.

In a second aspect, the present invention relates to a photovoltaic system. The photovoltaic system comprises one or more photovoltaic panels. The photovoltaic system further comprises a controller configured for obtaining at least data representative of power generated by the one or more photovoltaic panels in function of time. The controller is further configured for assigning, based on at least said data, a first amount of power to outputting by the photovoltaic system, and a second amount of power to cooling of the one or more photovoltaic panels, so as to optimize the output power characteristics of the photovoltaic system. The photovoltaic system further comprises a cooling unit for cooling of the one or more photovoltaic panels, adapted for receiving the second amount of power. The photovoltaic system further comprises an output for outputting the first amount of power.

The power generation efficiency of photovoltaic panels is dependent on the temperature of the photovoltaic panels. At higher temperatures, which may result from the photovoltaic panels being exposed to sunlight that they use to generate power, the carrier concentration at the p-n junction of the photovoltaic panels may increase, resulting in a lower efficiency of the photovoltaic panels (see, e.g., Ali, Hafiz Muhammad, et al. "Outdoor testing of photovoltaic modules during summer in Taxila, Pakistan." Thermal Science 20.1 (2016): 165-173). In embodiments of the present invention, cooling of the one or more photovoltaic panels may be used to control the output power characteristics, in particular, the ramp rate, by effectively adjusting the power generation by the one or more photovoltaic panels itself.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

Example: Scheme for optimizing output power characteristics of a photovoltaic system

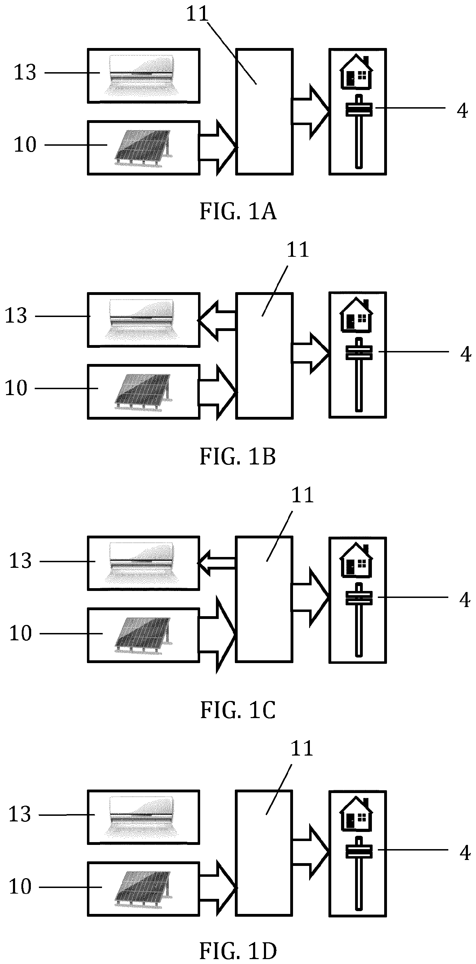

Reference is made to FIG. 1A to 1D, which are schematic representations depicting flow of power between the different components of a photovoltaic system in accordance with embodiments of the present invention, comprising one or more photovoltaic panels 10, a controller 11 and a cooling unit 13, and a load and/or grid 3 coupled to an output of the photovoltaic system. In this example, a ramp rate of power provided to the grid is preferably limited. However, it will be clear to the skilled person that other output power characteristics could be optimized in a similar way. Power generated by the one or more photovoltaic panels 10 and/or power demanded by the load may fluctuate over time.

It is now explained how the cooling unit 13 for cooling the one or more photovoltaic panels 10 may be used to limit a ramp rate of power provided to the grid. During fluctuations of power generated by the one or more photovoltaic panels 10, when the generated power increases rapidly, the cooling unit 13 may be activated to consume excess power. Thereby, the ramp rate of the power provided to the grid may be limited. On the other hand, when power generated by the one or more photovoltaic panels 10 suddenly decreases, the cooling unit 13 may be turned off, or less power may be assigned thereto, so that the ramp rate of power transferred to the grid may be limited. Energy injection into the cooling system 13 may be continuously adjusted up and down to adapt the ramp rate of the output power to a preferred or required ramp rate.

In FIG. 1A, there are no significant fluctuations in power generated by the one or more photovoltaic panels 10, and power generation by the one or more photovoltaic panels 10 may match demand by the load and/or grid 3. In this state, a first amount of power assigned to outputting by the photovoltaic system may be equal to the power generated by the photovoltaic panels 10, and a second amount of power assigned to the cooling unit 13 may be zero.

In FIG. 1B, when power generated by the one or more photovoltaic panels 10 surges due to an increased solar irradiation, and/or when power demanded by the load drops, resulting in excess electricity that may be rejected by the grid, the cooling unit 13 may be operated to cool the one or more photovoltaic panels 10 by increasing the second amount of power assigned to the cooling unit 13. This may prevent power surges to the grid that may be rejected by the grid.

In FIG. 1C, in case of a sudden drop in solar radiation resulting in a drop in power generated by the one or more photovoltaic panels 10, and/or a surge in demand by the load, the second amount of power sent to the grid the cooling units 13 may be reduced or set to zero. The one or more photovoltaic panels 10 may generate more power as these are cooled and thus more efficient, resulting in a boost in power generation. Thereby, a sudden drop in power outputted to the grid may be prevented.

In FIG. 1D, the boost in power generation may end as the temperature of the one or more photovoltaic panels 10 gradually rises after the cooling unit 13 was turned off. Preferably, the period over which the temperature of the one or more photovoltaic panels 10 rises is long enough to prevent rejection of output power to the grid.

Example: Photovoltaic system

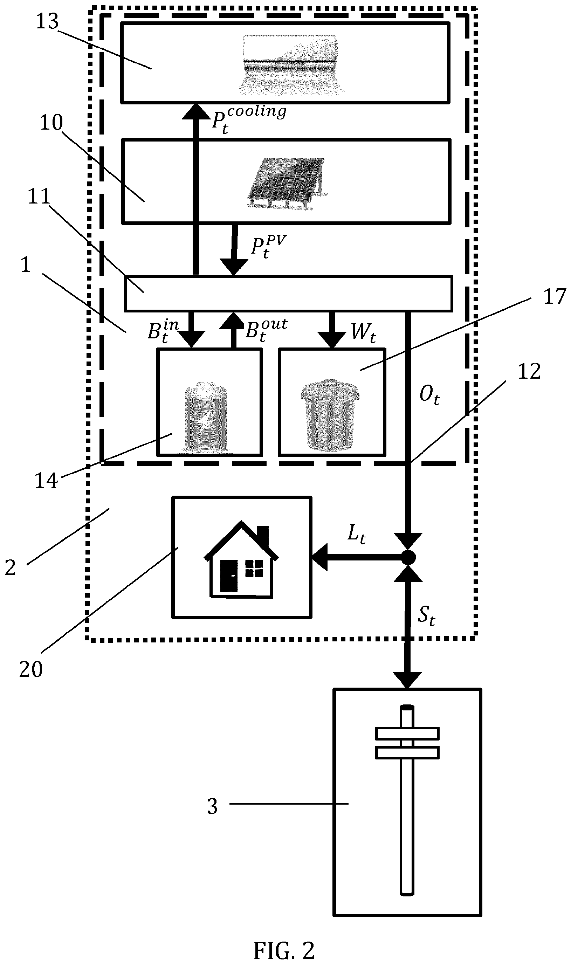

Now, a photovoltaic system 1 in accordance with embodiments of the present invention, and a method for optimizing output power characteristics of said photovoltaic system 1 in accordance with embodiments of the present invention, will be described with reference to FIG. 2. FIG. 2 is a schematic diagram indicating flow of power between different components of the photovoltaic system 1 in a microgrid 2, a load 20 in said microgrid 2, and a main grid 3 to which said microgrid 2 is electrically coupled.

The photovoltaic system 1 comprises one or more photovoltaic panels 10, which may generate electrical power when light is incident on the one or more photovoltaic panels 10. The photovoltaic system 1 further comprises a controller 11 that may assign or distribute power to different components of the photovoltaic system 1. The power that is assigned by the controller 11 is at least the power $P_t^{PV}$ generated by the one or more photovoltaic panels 10. However, the power that is assigned by the controller 11 may further comprise power provided by other power sources in the photovoltaic system 1, such as power $B_t^{out}$ provided by an energy storage system 14, which is in this example comprised in the photovoltaic system 1.

A first amount of said power $O_t$ may be assigned by the controller 11 to an output 12 of the photovoltaic system 1. In this example, the microgrid 2 comprises a load 20 that is not located in the photovoltaic system 1. Alternatively, or in addition thereto, the photovoltaic system 1 itself may comprise a load. Still alternatively, no load may be present in the microgrid 2, and the output 12 of the photovoltaic system 1 could be only connected to the main grid 3.

The main grid 3 may exchange electrical power $S_t$ with the microgrid 2, so that the main grid 3 may receive power from the microgrid 2 (including power generated by the photovoltaic system 1) or may provide power to the microgrid 2 (for example, when power generated by the one or more photovoltaic panels 10 is insufficient to match the power demand $L_t$ of the load 20). When there is a sudden change in the amount of power $S_t$ exchanged between the microgrid 2 and the main grid 3, the stability of the main grid 3 may deteriorate. For example, transient clouds could temporarily block sunlight from reaching the one or more photovoltaic panels 10 of the photovoltaic system 1, so that the power $P_t^{PV}$ generated by the one or more photovoltaic panels 10 could swiftly increase or decrease, i.e., exhibit a large ramp rate. Alternatively, the power demand $L_t$ of the load 20 may suddenly drop or surge. In the example illustrated, the main grid 3 may reject power $S_t$ it receives from the microgrid 2 when the ramp rate of the power $S_t$ provided to the main grid 3 becomes too large, as that could result in overload of the main grid 3. To prevent said overload of the main grid 3, the microgrid 2 may even be electrically disconnected from the main grid 3. Said rejection may result in waste of at least part of the power $P_t^{PV}$ generated by the one or more photovoltaic panels 10, and loss of revenues for the owner of the photovoltaic system 1.

A second amount of power $P_t^{cooling}$ is assigned by the controller 11 to a cooling unit 13 for cooling of the one or more photovoltaic panels 10. As the yield of the one or more photovoltaic panels 10 may be low when the temperature of the one or more photovoltaic panels 10 is high, said cooling may increase the yield of the one or more photovoltaic panels 10.

In the example illustrated, the photovoltaic system 1 further comprises an energy storage system 14, e.g., an electrical battery. The energy storage system 14 may temporarily store power that may not be immediately assigned to cooling - for example, because the cooling unit 13 is already cooling at maximum power, or when the temperature of the one or more photovoltaic panels 10 becomes so low that further cooling by the cooling unit 13 would result in reducing the yield, i.e., efficiency, of the one or more photovoltaic panels 10- but may also not be immediately assigned to the output 12 as that could, for example, result in a too large ramp rate of the power $S_t$ outputted to the grid 3. The controller 11 may, thus, assign a third amount of power $B_t^{in}$ to the energy storage system 14.

In the example illustrated, the photovoltaic system 1 further comprises a dump load 17, which may receive power $W_t$ that may not be provided to the energy storage system 14 - for example, because the energy storage system 14 is fully charged -, nor to the cooling system 13, and also not to the output 12. The dump load 17 may effectively prevent overload within the photovoltaic system 1. However, power $W_t$ assigned to the dump load 17 is effectively lost. The dump load 17 may, for example, contain resistors that convert the assigned electrical power $W_t$ to heat, which may subsequently be dissipated by the dump load 17.

In this example, the amount of power $S_t$ exchanged between the microgrid 2 and the main grid 3 depends on the power $O_t$ outputted by the photovoltaic system 1 and on the power $L_t$ demanded by the load 20 (e.g., as $S_t = O_t - L_t$). When the power generated by the photovoltaic panels 10 and the power $O_t$ outputted by the photovoltaic system 1 surges, and, at the same time, the power $L_t$ demanded by the load 20 surges correspondingly, the power $S_t$ exchanged with the main grid 3 may remain constant. In such a case, there may be no need to assign power $P_t^{cooling}$ to the cooling unit 13 so as to optimize the ramp rate of the power $O_t$ outputted by the photovoltaic system 1, as the ramp rate of the power $S_t$ exchanged with the main grid 3 is constant. To be able to accurately take the power $L_t$ demanded by the load 20 into account for assigning power, the controller 11 preferably receives a load profile of said load 20, which comprises data of the power demand $L_t$ of the load 20 as function of time. The controller 11 may use said load profile for assigning power so as to optimize the output power characteristics of the photovoltaic system 1 for minimizing a ramp rate of power $S_t$ exchanged between the microgrid 2 and the main grid 3. In that case, optimizing the ramp rate of the output power $O_t$ of the photovoltaic system 1 may comprise compensating for a ramp rate of power $L_t$ demanded by the load 20. The ultimate goal of optimizing the ramp rate of the power $O_t$ outputted by the photovoltaic system 1 is, in the example illustrated, to limit the ramp rate of power $S_t$ exchanged between the microgrid 2 and the main grid 3. Said limiting may mean minimizing the ramp rate of power $S_t$ exchanged between the microgrid 2 and the main grid 3, or may mean keeping the ramp rate of power $S_t$ exchanged between the microgrid 2 and the main grid 3 below a threshold ramp rate.

Alternatively, optimizing the ramp rate of the output power $O_t$ of the photovoltaic system 1 may comprise limiting said ramp rate of the output power $O_t$ of the photovoltaic system 1. This may, for example, be preferred if there is no load 20 or if power $L_t$ demanded by the load 20 is small compared to the power $O_t$ of the photovoltaic system 1.

Example: Modelling the optimization of the output power characteristics of a photovoltaic system

Now follows an explanation of simulations that show the effect that embodiments of the present invention may have on optimizing output power characteristics of a photovoltaic system comprising one or more photovoltaic panels. These simulations are performed on the photovoltaic system shown in FIG. 2 and that was detailed above.

In the model used for the simulations, by solving an optimization problem, power is assigned by the controller 11 to the output 12, the energy storage system 14 and the cooling unit 13 so as to keep at least the ramp rate of power exchanged between the microgrid 2 and the main grid 3 low, by balancing demand $L_t$ of the load 20 and power outputted $O_t$ by the photovoltaic system 1. The controller 11 of the photovoltaic system 1 may control the power flow throughout the photovoltaic system 1 based at least on said power balance. The controller 11 monitors the power gradient of the photovoltaic system 1, and receives, in this example, a load profile for the load 20, but does not monitor a power gradient of the main grid 3.

The microgrid 2 receives power from the main grid 3 when there is a power shortage, i.e., when more power $L_t$ is demanded by the load 20 than outputted $O_t$ by the photovoltaic system 1. Excess power is transmitted to the main grid 3 and consumed by the cooling units 13 and energy storage system 14 as much as possible, but depending on the ramp rate, power may have to be wasted within the photovoltaic system 1, e.g., in the dump load 17.

Within the exemplary model, which describes power flow within the system shown in FIG. 2, the energy balance may be formulated by:

$$S_t = P_t^{PV} + B_t^{out} - L_t - P_t^{cooling} - B_t^{in} - W_t, \forall t \qquad \text{(eq. 1)}$$

where $S_t$ is power exchanged between the microgrid 2 and the main grid 3; $P_t^{PV}$ is the amount of power generated by the one or more photovoltaic panels 10; $B_t^{out}$ is power provided by the energy storage system 14, e.g., by discharge of a battery; $L_t$ is power demanded by the load 20; $P_t^{cooling}$ is power consumed by the cooling unit 13; $B_t^{in}$ is power provided to the energy storage system 14, e.g., to charge the battery; and $W_t$ is wasted power, i.e., power provided to the dump load 17. Herein, $\forall t$ indicates that the equation is valid at all times.

Within the present example, the power $S_t$ exchanged between the microgrid 2 and the main grid 3, and the power $O_t$ outputted by the photovoltaic system 1, are related by $S_t = O_t - L_t$, with $O_t = P_t^{PV} + B_t^{out} - P_t^{cooling} - B_t^{in} - W_t$. $S_t$ is positive when power is transmitted from the microgrid 2 to the main grid 3. $S_t$ is negative when power is transmitted from the main grid 3 to the microgrid 2.

Power $P_t^{cooling}$ consumed by the cooling unit 13, and power $W_t$ assigned to the dump load 17, i.e., wasted power $W_t$, cannot be negative:

$$0 \le P_t^{cooling}, \forall t \qquad\qquad \text{(eq. 2)}$$

$$0 \le W_t, \forall t. \qquad\qquad \text{(eq. 3)}$$

To model the yield of the one or more photovoltaic panels 10, which depends both on irradiation and on the temperature of the one or more photovoltaic panels 10, a mathematical photovoltaic electrical model and an equivalent circuit-based photovoltaic thermal model is used to estimate the electrical and thermal characteristics of the one or more photovoltaic panels 10.

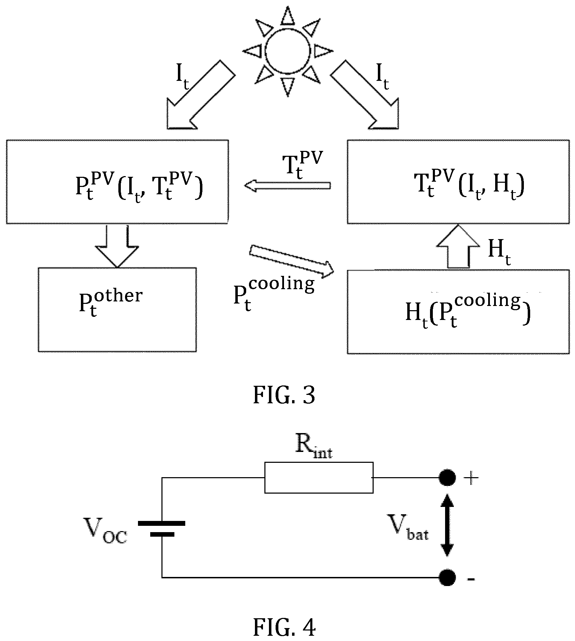

FIG. 3 schematically illustrates the input and output variables for the photovoltaic electrical model $P_t^{PV}(I_t, T_t^{PV})$, the photovoltaic thermal model $T_t^{PV}(I_t, H_t)$, and the cooling unit model $H_t\left(P_t^{cooling}\right)$ used in this study, and how these models are coupled to each other.

In the example, the photovoltaic electrical model $P_t^{PV}(I_t, T_t^{PV})$ (in Watts) is expressed as:

$$P_t^{PV} = \alpha(0.2047 I_t - 3.379) \cdot \left\{1.36464 - 0.36423 \cdot \exp\left(0.00991 \cdot T_t^{PV}\right)\right\}, \forall t$$

$$\text{(eq. 4)}$$

and the photovoltaic thermal model $T_t^{PV}(I_t, H_t)$ (in degrees Celsius) is expressed as:

$$T_{t+1}^{PV} = \exp\left(-\frac{t}{\tau}\right) \cdot T_t^{PV} + \left\{1 - \exp\left(-\frac{t}{\tau}\right)\right\} \cdot \left(T_t^{ambient} + R \cdot \left(-\frac{H_t}{\alpha} + I_t\right)\right), \forall t$$

$$\text{(eq. 5)}$$

where $\alpha$ is the number of photovoltaic panels 10, t is time index, $I_t$ is solar irradiation at time t, $T_t^{PV}$ is the temperature of the one or more photovoltaic panels 10 at time t, $\tau$ is a photovoltaic panel time characteristic or the photovoltaic panel thermal constant time, $T_t^{ambient}$ is an ambient temperature at time t, R is the thermal resistance of the one or more photovoltaic panels 10, and $H_t$ is heat produced (i.e., energy removed from the one or more photovoltaic panels 10) by the cooling unit 13 at time t. The photovoltaic electrical model $P_t^{PV}(I_t, T_t^{PV})$ is for estimating the power generated by the one or more photovoltaic panels 10 as a function of solar irradiation and temperature. The temperature of the one or more photovoltaic panels 10 preferably does not drop below a predetermined temperature, as the one or more photovoltaic panels 10 would not function well below said predetermined temperature. Therefore, the present example has the following further requirement:

$$T^{PV,lower} \le T_t^{PV}, \forall t. \qquad\qquad \text{(eq. 6)}$$

To simplify the modelling, a simple coefficient of performance (COP) was used to model cooling by the cooling unit 13:

$$H_t = P_t^{cooling} \cdot COP, \forall t, \qquad\qquad \text{(eq. 7)}$$

so that the $H_t$ can simply be calculated from said COP and from the power consumption of the cooling unit 13, $P_t^{cooling}$ . As an example, the COP of a single stage thermoelectric (Peltier) cooler is typically between 0.3 and 0.7 and the COP for a typical air conditioner is typically from 5 to 8. In this example, it is assumed that COP is constant, independent of any (internal or external, e.g., environmental) conditions. Calculated power $P_t^{PV}(I_t, T_t^{PV})$ not assigned to cooling $P_t^{cooling}$, may be assigned by the controller 11 to provide power $P_t^{other}$ to, for example, charging an energy storage system 14 or for outputting.

In this exemplary model, a simple internal resistance battery model (as described in Johnson, V. H. "Battery performance models in ADVISOR." Journal of power sources 110.2 (2002): 321-329) is used to estimate the battery charge and discharge status. FIG. 4 schematically illustrates a battery model wherein the ideal open-circuit voltage source ($V_{OC}$) is in series with an effective internal resistance of the battery ($R_{int}$), wherein $V_{OC}$ and $R_{int}$ are dependent on the state-of-charge (SOC) of the battery. The SOC of the battery model of this example is estimated by a Coulomb Counting (CC) method:

$$SOC = (Ah_{rate} - Ah_{used}/Ah_{rate}), \qquad \text{(eq. 8)}$$

with $Ah_{rate}$ a rated maximum charge of the battery, and where

$$Ah_{used} = \int_0^t I(t)dt. \qquad \text{(eq. 9)}$$

The change in the SOC level is calculated based on the battery current:

$$SOC_{t+1} = SOC_t + \left((\gamma \cdot B_t^{in} - B_t^{out})/B^{cap} \cdot 3600\right) \cdot \Delta t, \forall t \qquad \text{(eq. 10)}$$

where $\gamma$ is the charging efficiency, $B^{cap}$ is the battery capacity, and $\Delta t$ is the step length in the optimization calculation. $B_t^{in}$ and $B_t^{out}$ cannot be negative, and cannot be larger than the maximum discharging speed:

$$0 \leq B_t^{in} \leq C^{rate}, \forall t \qquad \text{(eq. 10)}$$

$$0 \leq B_t^{out} \leq C^{rate}, \forall t \qquad \text{(eq. 11)}$$

Furthermore, $SOC_1 = SOC^{init}$, which is an initial SOC, and the SOC is bound by a lower and upper limit, i.e.:

$$SOC^{min} \leq SOC_t \leq SOC^{max}, \forall t \qquad \text{(eq. 12)}$$

In addition, charging and discharging do not occur simultaneously, corresponding to the following requirement in the model:

$$B_t^{in} \cdot B_t^{out} = 0, \forall t. \qquad \text{(eq. 13)}$$

Now that we have equations for modelling the different components of the photovoltaic system 1, we are in a position to set up a mathematical formulation for optimizing scheduling of the cooling unit 13, operation of the energy storage system 14, and the power $O_t$ outputted by the photovoltaic system 1. The following objective function describes this scheduling optimization problem:

$$\text{minimize} \sum_{t=1}^{\mathcal{T}} (S_{t+1} - S_t)^2 - \beta \sum_{t=1}^{\mathcal{T}} S_t + \sum_{t=1}^{\mathcal{T}} W_t \qquad \text{(eq. 14)}$$

where $\beta$ is a coefficient for scaling - in the present example $\beta$ is set at a constant value of 0.0000982. The objective function simultaneously minimizes the ramp rate of power $S_t$ exchanged between the microgrid 2 and the main grid 3, maximizes the power $S_t$ supplied to the main grid 3, and minimizes the wasted power $W_t$, over the planning period $\mathcal{T}$. Herein, the objective function is subject to equations 1 to 13, with the following input variables:

$$\left\{ L_t, I_t, T_t^{ambient} \right\}, \forall t$$

and with decision variables

$$\left\{ S_t, P_t^{cooling}, B_t^{in}, B_t^{out} \right\}, \forall \{t\}.$$

Using the objective function, several simulations are performed to demonstrate the effectiveness of the method in accordance with embodiments of the present invention, within realistic, practical assumptions. The experimental setup is first described, followed by case studies under different seasonal settings for the model. The effects of the size of the energy storage system 14, i.e., a battery, and the COP, which represents the performance of the cooling unit 13, on control of the ramp rate of power $S_t$ exchanged between the microgrid 2 and the main grid 3 are also discussed.

For each simulation, the period over which the simulation is performed is 15 minutes with a time resolution of 1 second. The parameters of the battery 14 are summarized in Table 1.

Table 1: Description, symbol and value for different variables for the battery, used in the simulations.

| Description | Symbol | Value |
|---|---|---|
| Initial SOC | SOC$^{init}$ | 0.9 (90%) |
| Minimal SOC | SOC$^{min}$ | 0.2 (20%) |
| Maximal SOC | SOC$^{max}$ | 1 (100%) |
| Allowable charging/discharging speed | C$^{rate}$ | 10 [kWh/sec] |
| Charging efficiency | Y | 0.9 |
| Battery capacity | B$^{cap}$ | 10 [kWh] |

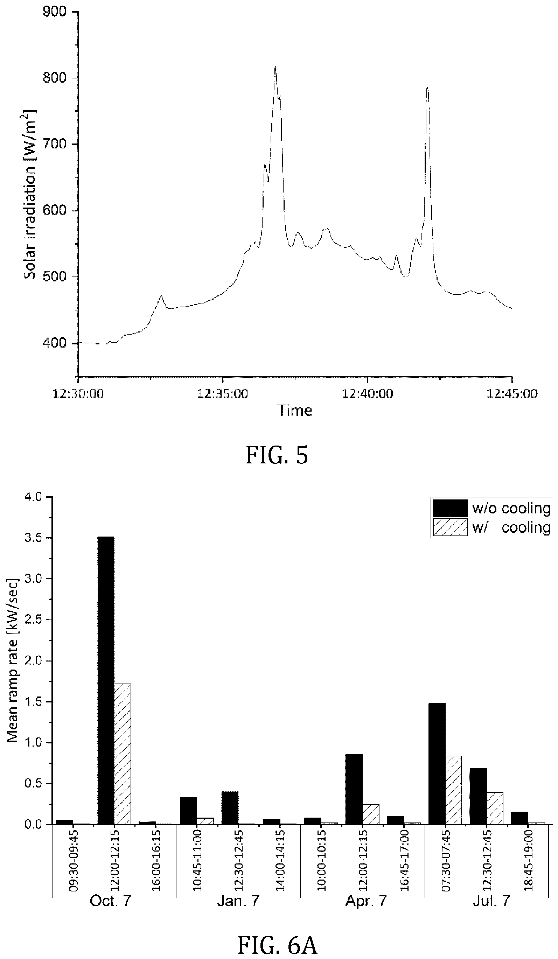

Outdoor temperature and solar irradiation data for Oldenburg were collected with a resolution of 1 second. As shown in FIG. 5, which shows one of the data sets, the collected data covers a 15-minute period during which power generation by the one or more photovoltaic panels 10 is highly variable. The different time periods of 15 minutes selected for simulation for each season and time of the day are summarized in Table 2. Herein, the morning is selected two hours after sunrise of each day and the evening is selected two hours before sunset of each day.

Table 2: Time period for which data for Oldenburg were collected for the different simulations.

| | Time of the day | | |
|---|---|---|---|
| Season | Morning | Noon | Evening |
| Autumn | October 7, 2014 9:30-9:45 | October 7, 2014 12:00-12:15 | October 7, 2014 16:00-16:15 |
| Winter | January 7, 2015 10:45-11:00 | January 7, 2015 12:30-12:45 | January 7, 2015 14:00-14:15 |
| Spring | April 7, 2015 10:00-10:15 | April 7, 2015 12:00-12:15 | April 7, 2015 16:45-17:00 |
| Summer | July 7, 2015 7:30-7:45 | July 7, 2015 12:30-12:45 | July 7, 2015 18:45-19:00 |

The parameters relating to the one or more photovoltaic panels 10 in the optimization problem are summarized in Table 3.

Table 3: Parameter settings for the photovoltaic panels. (*)When the temperature of the photovoltaic panel is less than 10°C, $T^{lower}$ is 0.

| Description | Symbol | Value |
|---|---|---|
| Lower temperature limit of photovoltaic panel | $T^{lower}$ | 10 [°C] (*) |
| Nominal solar irradiation | $I^{nominal}$ | 800 [W/m²] |
| Photovoltaic panel thermal resistance | R | 0.01874 [K/W] |
| Number of photovoltaic panels | $\alpha$ | 5000 |
| Photovoltaic panel temperature time characteristic | T | 1128 [sec] |

The number of photovoltaic panels 10 is selected to simulate a photovoltaic system 1 that is a photovoltaic plant with a maximum output of 1 MW.

The load profiles were created based on the actual grid frequency data for Oldenburg. The base components of the load profiles were set as shown in Table 4 for each season and time of day according to the size of the photovoltaic plant assumed in this study.

Table 4: Base components of load profiles by season and time of day (in kWh)

| | Time of the day | | |
|---|---|---|---|
| Season | Morning | Noon | Evening |
| Autumn | 200 | 400 | 20 |
| Winter | 500 | 400 | 60 |
| Spring | 300 | 400 | 40 |
| Summer | 500 | 400 | 60 |

Noise components created from the Oldenburg grid frequency data are combined with said base components and used as load profile for the simulation.

The ramp rate of power $S_t$ exchanged between the microgrid 2 and the grid main grid 3 is defined by:

$$Ramp\ rate = \frac{|\Delta P| \cdot T_s}{time\ scale}$$

where $\Delta P$ describes the change in power $S_t$, i.e., $\Delta P = S_{t+1} - S_t$, exchanged between the microgrid 2 and the grid main grid 3, $T_s$ describes resolution of the data ($T_s$ = 1 for the present simulations), and time scale describes the time scale for calculating the ramp rate (time scale = 1 for the present simulations).

Now, the effect of cooling of the photovoltaic panels 10 on the ramp rate is examined. These simulations were performed for each of the seasons and time periods. In each simulation, the battery capacity was set to 10 kWh and the COP of the cooling unit 13 to 15.

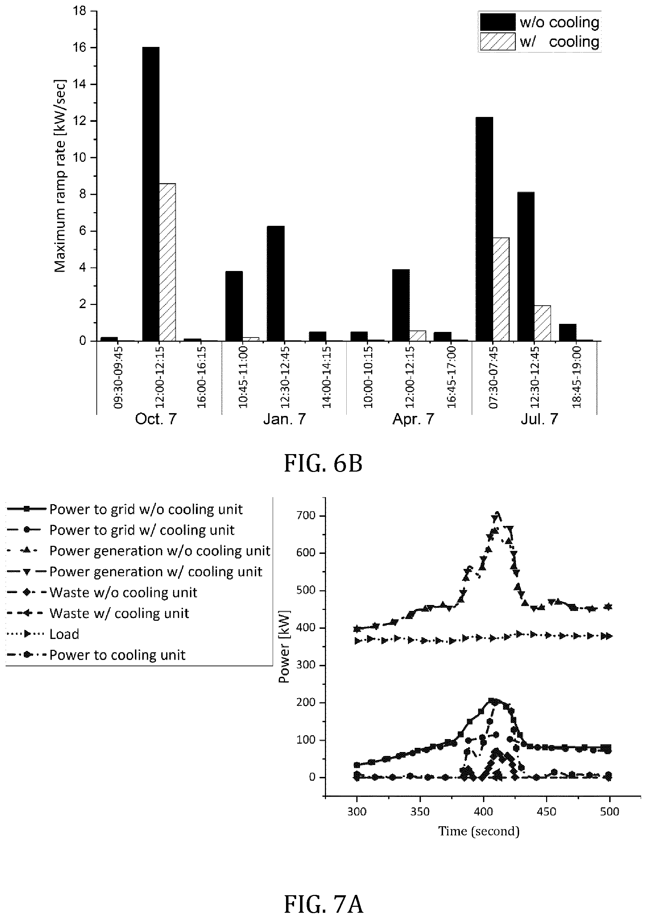

The mean and maximum ramp rates of power $S_t$ exchanged between the microgrid 2 and the main grid 3 are shown in FIG. 6A and FIG. 6B, respectively, for each season and time of day with and without cooling, i.e., with and without assigning an amount of power to cooling of the photovoltaic panels 10. It may be observed that both the mean and maximum ramp rates have dropped due to cooling of the photovoltaic panels 10, for all seasons and time periods, showing the effectiveness of the method in accordance with embodiments of the present invention for optimizing output power characteristics of the photovoltaic system 1.

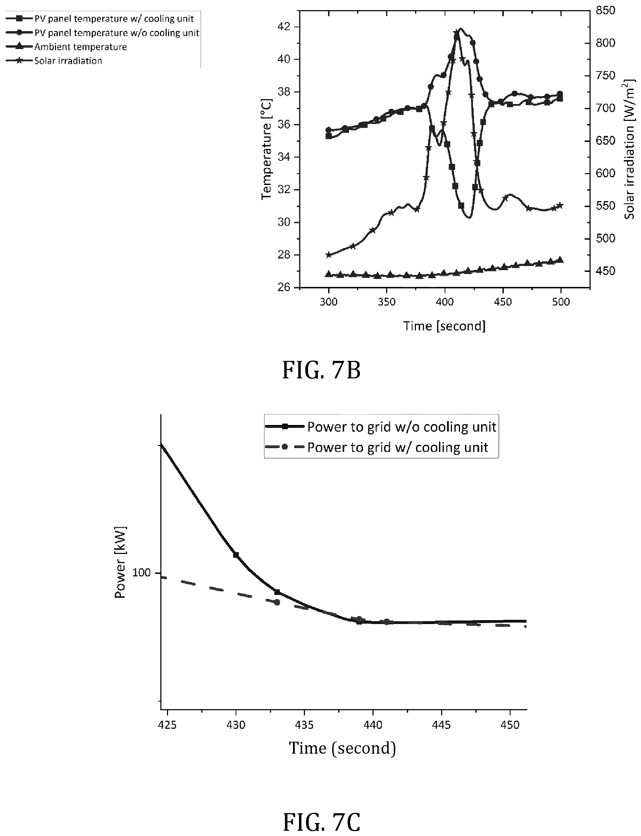

Amongst the different seasons and times of day, the simulation for the summer noon (i.e., July 7, 12:30 - 12:45) will be further analysed, which is when solar irradiation is high. In summer during noon, cooling of the photovoltaic panels 10 reduced the mean ramp rate from 0.6850 to 0.3871 (corresponding to a 43.5% reduction), and the maximum ramp rate from 8.111 to 1.929 (corresponding to a 76.2% reduction). FIG. 7A and FIG. 7B shows the simulation results for 200 seconds during the 15-minute period of the simulation, when there is a large change in solar irradiation. FIG. 7A shows how power is assigned by the controller 11. In FIG. 7B, ambient and panel temperatures and solar irradiation are shown. The dotted line is for the case without cooling. The horizontal axis is common in FIG. 7A and FIG. 7B.

Comparing the power to the main grid 3 with and without cooling in FIG. 7A, it may be observed that the change in power, or ramp rate, is smaller with cooling than without. First, at around 375 seconds, the solar irradiation shown in FIG. 7B begins to increase rapidly. Then, the amount of power generated by the photovoltaic panels 10 shown in FIG. 7A also increases due to the increase in solar irradiation. Since the ramp rate will increase at this rate, the cooling unit 13 operates as shown to cool the photovoltaic panels 10 at the same time that power is consumed. This reduces the surge of power provided to the main grid 3, as can be seen in FIG. 7A. The pre-cooling of the photovoltaic panels 10 also prevents an increase in ramp rate that would be due to the sudden decrease in solar irradiation. FIG. 7B shows a sharp decrease in solar irradiation at around 420 seconds. The decrease in solar irradiation reduces the power generated by the photovoltaic panels 10, as shown in FIG. 7A, but because of the pre-cooling, the decrease is less pronounced than in the case without cooling, shown by the dotted line. In addition to that, by gradually weakening the amount of provided assigned to the cooling unit 13, and assigning power, previously assigned to the cooling unit 13, to the output 12 of the photovoltaic system 1 for outputting to the main grid 3, the change in power to the main grid 3 is smoother in the solid line with cooling, as shown in FIG. 7C, zooming in on part of FIG. 7A.

FIG. 6A and FIG. 6B shows that the ramp rate is originally small in the morning and evening and in winter. This is due to the small amount of solar irradiation during those times and seasons. However, even during those times and seasons, the method in accordance with the present invention with cooling does not increase the ramp rate and achieves the same or reduced ramp rate as when no power is assigned to cooling.

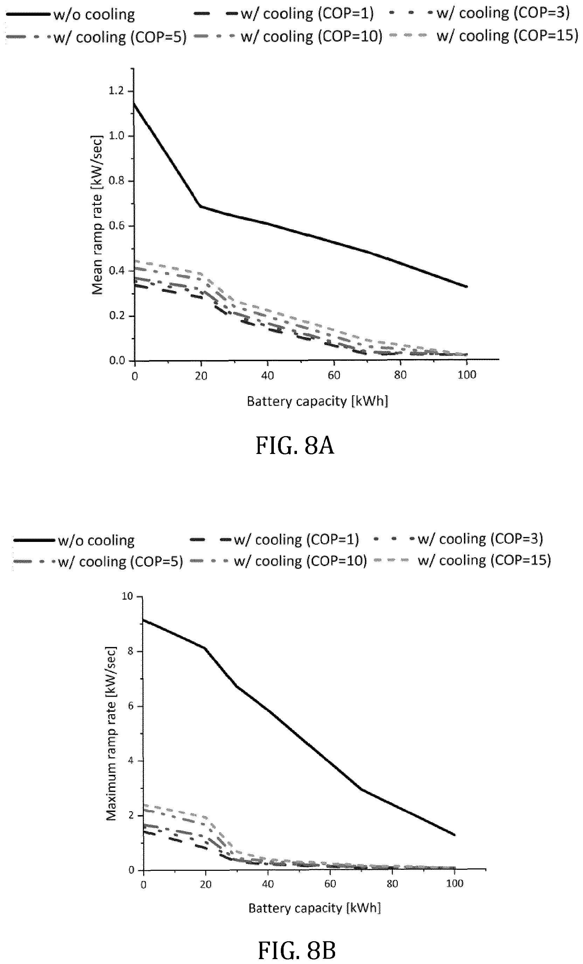

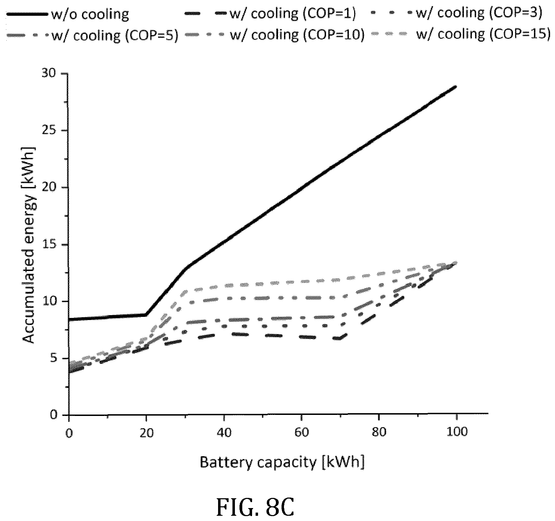

Now, it is investigated how varying the battery capacity and the COP, which represents the performance of the cooling unit 13, affects the ramp rate. The battery capacities evaluated are 0 (no battery), 10, 20, 30, 40, 70, and 100. The COPs of the cooling units evaluated are 1, 3, 5, 10, and 15. This simulation is performed using the data from 15 minutes of summer noon (12:30-12:45 on July 7, 2015). Using a cooling unit 13 with a small COP may reduce the ramp rate only by consuming power, without improving the efficiency of power generation through cooling. Since this is not desirable, we added, in addition to ramp rate as an evaluation metric, the accumulated energy, which is the accumulated amount of energy sent from the microgrid 2 to the main grid 3 (i.e., equals $\sum_1^{\mathcal{T}} S_t$, with $\mathcal{T}$ still the planning period). This value is typically smaller if the cooling unit 13 is not improving the efficiency of power generation by the photovoltaic panels 10 of the photovoltaic system 1. The mean ramp rate, maximum ramp rate, and accumulated energy at each battery capacity and COP are shown in FIG. 8A, FIG. 8B and FIG. 8C, respectively. The horizontal axis is the battery capacity. The dashed line shows results without cooling. FIG. 8A and FIG. 8B show that for all battery capacities and COPs, both the mean and maximum ramp rates are smaller with cooling than without cooling. Focusing on the part of the battery capacity up to 40 kWh, a ramp rate reduction of more than 50% when cooling, compared to when not cooling, is achieved with a maximum loss of only about 10 kWh of accumulated energy. Even a really easy value for COP to achieve, COP=1, provides very good ramp rate control, although it reduces the amount of power transmitted to the grid. Focusing on the part of the battery capacity above 70 kWh, while there is more loss of accumulated energy than without cooling, as shown in FIG. 8C, the mean and maximum ramp rates are almost zero in FIG. 8A and FIG. 8B. Note that a non-cooling solution with relatively high accumulated energy would require the use of a fossil fuel-based gas turbine for when it does not work and a large battery to compensate for at least some of the peaks.

As is clear from these simulations, the method in accordance with embodiments of the present invention may control the output power characteristics of the photovoltaic system 1, to, in this example, control a ramp rate of power provided to the main grid 3. This is achieved by assigning power to cooling of photovoltaic panels 10, thereby boosting the yield of said photovoltaic panels 10, without using gas turbines or high-capacity batteries, which have a high environmental impact and system cost.

Although the above example is on a specific algorithm of optimizing the output characteristics, including the ramp rate of the output power, of the photovoltaic system 1, the invention is not limited thereto, and other algorithms may be used instead.

It is to be understood that although preferred embodiments, specific constructions and configurations, as well as materials, have been discussed herein for devices according to the present invention, various changes or modifications in form and detail may be made without departing from the scope of this invention. For example, any formulas given above are merely representative of procedures that may be used. Steps may be added or deleted to methods described within the scope of the present invention.

**Claims**

1. A method for optimizing output power characteristics of a photovoltaic system (1) comprising one or more photovoltaic panels (10), the method comprising:

obtaining at least data representative of power ($P_t^{PV}$) generated by the one or more photovoltaic panels (10) in function of time, and

assigning, based on at least said data, a first amount of power ($O_t$) to outputting by the photovoltaic system (1) and a second amount of power ($P_t^{cooling}$) to cooling of the one or more photovoltaic panels (10), so as to optimize the output power characteristics of the photovoltaic system (1).

2. The method of claim 1, wherein said assigning is further based on a load profile of a load (20).

3. The method of any of the previous claims, wherein said assigning of the first ($O_t$) and second amounts of power ($P_t^{cooling}$) is at least performed so as to optimize a magnitude of the output power ($O_t$) and/or a magnitude of a wasted power ($W_t$).

4. The method of claim 3, wherein optimizing a magnitude of the output power ($O_t$) comprises limiting the magnitude of the output power ($O_t$) of the photovoltaic system (1) to a predetermined maximum output power.

5. The method of any of the previous claims, wherein said assigning of the first ($O_t$) and second amounts of power ($P_t^{cooling}$) is performed so as to at least optimize a ramp rate of the output power ($O_t$).

6. The method of claim 5, wherein, when the data representative of power ($P_t^{PV}$) generated by the one or more photovoltaic panels (10) in function of time indicates an increase of power ($P_t^{PV}$) generated by the one or more photovoltaic panels (10) over a period of time, and when said optimizing the ramp rate means that the ramp rate is to be suppressed, said assigning comprises reducing the first amount ($O_t$) and increasing the second amount ($P_t^{cooling}$) over said period of time.

7. The method of claim 5 or 6, wherein, when the data representative of power ($P_t^{PV}$) generated by the one or more photovoltaic panels (10) in function of time indicates a reduction of power ($P_t^{PV}$) generated by the one or more photovoltaic panels (10) over a period of time, and when said optimizing the ramp rate means that the ramp rate is to be suppressed, said assigning comprises increasing the first amount ($O_t$) and reducing the second amount ($P_t^{cooling}$) over said period of time.

8. The method of any of claims 5 to 7, wherein optimizing the ramp rate comprises reducing a mean ramp rate over a period of time.

9. The method of any of the previous claims, wherein said assigning is further based on data representative of weather information in function of time.

10. The method of any of the previous claims, wherein said assigning furthermore comprises assigning a third amount of power ($B_t^{in}$) to charging of an energy storage system (14).

11. The method of claim 10, wherein said assigning further comprises providing an amount of power ($B_t^{out}$) from the energy storage system (14) by discharging of the energy storage system (14).

12. A photovoltaic system (1) comprising:

one or more photovoltaic panels (10),
a controller (11) configured for:

obtaining at least data representative of power ( $P_t^{PV}$ ) generated by the one or more photovoltaic panels (10) in function of time, and

assigning, based on at least said data, a first amount of power ($O_t$) to outputting by the photovoltaic system, and a second amount of power ( $P_t^{cooling}$ ) to cooling of the one or more photovoltaic panels, so as to optimize the output power characteristics of the photovoltaic system (1),

a cooling unit (13) for cooling of the one or more photovoltaic panels, adapted for receiving said second amount of power ( $P_t^{cooling}$ ), and

an output (12) for outputting said first amount of power ($O_t$).

13. The photovoltaic system (1) of claim 12, wherein a coefficient of performance of the cooling unit (13) is at least 3, preferably at least 5, more preferably at least 10.

14. The photovoltaic system (1) of any of claims 12 or 13, further comprising an energy storage system (14), adapted for receiving a third amount of power ( $B_t^{in}$ ) for charging of the energy storage system (14), and for providing power ( $B_t^{out}$ ) to the cooling unit (13) and/or to the output (12) of the photovoltaic system (1), by discharging of the energy storage system (14).

15. The photovoltaic system (1) of any of claims 12 to 14 for outputting power to a grid (3) for which a dynamic pricing procedure is in place, wherein the controller (11) is configured for obtaining a price for power outputted by the photovoltaic system (1) to said grid (3) as function of time, wherein said assigning is performed so as to maximize a profit for power ($O_t$) outputted by the photovoltaic system (1) to said grid (3).

FIG. 1A

FIG. 1B

FIG. 1C

FIG. 1D

FIG. 2

FIG. 3

FIG. 4

FIG. 5

FIG. 6A

FIG. 6B

FIG. 7A

FIG. 7B

FIG. 7C

FIG. 8A

FIG. 8B

FIG. 8C

Europäisches
Patentamt

European
Patent Office

Office européen
des brevets

# EUROPEAN SEARCH REPORT

Application Number

EP 23 20 3925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2018/034312 A1 (ABDULLA KHALID [AU] ET AL) 1 February 2018 (2018-02-01)<br>* abstract; figures *<br>* paragraphs [0017] – [0022], [0027] – [0037] * | 1-3,5, 9-15<br><br>4,6-8 | INV.<br>H02J3/38<br>H01L31/052<br>H02S40/42 |
| X | US 2018/342979 A1 (JOARDAR TIASHA [US]) 29 November 2018 (2018-11-29)<br>* abstract; figures 1, 6-8 *<br>* paragraphs [0100], [0110] – [0133] * | 1-3,9, 12,13 | |

TECHNICAL FIELDS
SEARCHED      (IPC)

H02J
H01L
H02S

The present search report has been drawn up for all claims

| Place of search | Date of completion of the search | Examiner |
|---|---|---|
| Munich | 19 April 2024 | Hartmann, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 20 3925

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2024

| Patent document cited in search report | Publication date | Patent family member(s) | Publication date |
|---|---|---|---|
| US 2018034312 A1 | 01-02-2018 | US 2018034312 A1 | 01-02-2018 |
| | | US 2019199123 A1 | 27-06-2019 |
| US 2018342979 A1 | 29-11-2018 | US 2018342978 A1 | 29-11-2018 |
| | | US 2018342979 A1 | 29-11-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MARCOS, J et al.** torage requirements for PV power ramp-rate control. *Solar Energy*, 2014, vol. 99, 28-35
- **JEAN-LAURENT et al.** Power ramp-rate control algorithm with optimal State of Charge reference via Dynamic Programming.. *Energy*, 2018, vol. 149, 709-717
- **MARTINS, JOÃO et al.** Comparative study of ramp-rate control algorithms for PV with energy storage systems.. *Energies*, 2019, vol. 12 (7), 1342
- **BELTRAN, HECTOR et al.** Levelized cost of storage for li-ion batteries used in PV power plants for ramp-rate control. *IEEE Transactions on Energy Conversion*, 2019, vol. 34 (1), 554-561
- PV output smoothing using a battery and natural gas engine-generator.. **JOHNSON, JAY et al.** 2013 IEEE 39th Photovoltaic Specialists Conference (PVSC). IEEE, 2013
- Filter-based PV power smoothing control for island hybrid energy systems with high PV penetration. **SACHS, JULIA et al.** 2014 IEEE International Conference on Automation Science and Engineering (CASE). IEEE, 2014

- **OMRAN, WALID A ; M. KAZERANI ; M. M. A. SALAMA**. Investigation of methods for reduction of power fluctuations generated from large grid-connected photovoltaic systems. *IEEE Transactions on Energy Conversion*, 2010, vol. 26 (1), 318-327
- **ALI, HAFIZ MUHAMMAD**. Recent advancements in PV cooling and efficiency enhancement integrating phase change materials based systems-A comprehensive review. *Solar Energy*, 2020, vol. 197, 163-198
- **HAMZAT, ABDULHAMMED K. et al.** Advances in PV and PVT cooling technologies: A review. *Sustainable Energy Technologies and Assessments*, 2021, vol. 47, 101360
- **ALI, HAFIZ MUHAMMAD et al.** Outdoor testing of photovoltaic modules during summer in Taxila, Pakistan. *Thermal Science*, 2016, vol. 20 (1), 165-173
- **JOHNSON, V. H**. Battery performance models in ADVISOR. *Journal of power sources*, 2002, vol. 110 (2), 321-329